# FASCICULE DE BREVET EUROPEEN

(11) **EP 0 807 547 B1**
(45) Date de publication et mention de la délivrance du brevet: **12.07.2000**
(21) Numéro de dépôt: 97401052.2
(22) Date de dépôt: 12.05.1997
(51) Int. Cl.: B60Q 1/04

(54) **Fixation de feu sur carrosserie de véhicule automobile, comportant un ressort accordeon**
Leuchtenbefestigung mit akkordeonförmig gefalteter Feder an der Karosserie eines Fahrzeuges
Light fixation using a zigzag folded spring on the vehicle body

(30) Priorité: 14.05.1996 FR 9605986
(43) Date de publication de la demande: 19.11.1997
(73) Titulaire: VALEO VISION, 93000 Bobigny (FR)
(72) Inventeur: Donaire Camacho, Juan Manuel, 94000 Creteil (FR); Garcia Castilla, Jose, 94000 Creteil (FR)
(74) Mandataire: Le Forestier, Eric

(56) Documents cités:
- DE-B- 2 258 312
- FR-A- 899 047
- US-A- 2 138 076

## Description

La présente invention concerne un dispositif de fixation permettant d'assembler un dispositif d'éclairage et/ou de signalisation de véhicule automobile à la carrosserie d'un véhicule automobile, en rattrapant les jeux dus notamment aux tolérances de fabrication.

Pour des raisons d'ordre essentiellement esthétique, les constructeurs automobiles recherchent depuis quelques années un positionnement de plus en plus précis des feux de signalisation et des projecteurs, afin qu'ils s'intègrent parfaitement aux formes du véhicule et ne jouent pas dans leur logement.

La demanderesse a déjà proposé dans FR-A-2 719 269 un dispositif de fixation qui permet un réglage selon trois dimensions de la position relative d'une zone d'attache d'un boîtier ou socle du dispositif d'éclairage et/ou de signalisation et de la carrosserie du véhicule automobile.

Ce dispositif connu comprend principalement deux éléments capables de coulisser l'un par rapport à l'autre, un élément étant solidarisé au boîtier ou socle, et l'autre fixé sur la carrosserie par une vis, coopérant avec un écrou. Des moyens permettent l'immobilisation de l'ensemble dans une position de blocage.

Un tel dispositif de fixation permet un réglage de la position du boîtier par rapport à la carrosserie suivant trois directions indépendantes. Mais il ne s'adapte pas toujours à une grande variété de défauts de positionnement, et en particulier à un défaut de position angulaire des surfaces du boîtier et de la carrosserie du véhicule. De plus, ce dispositif met en oeuvre plusieurs pièces indépendantes, qu'il faut associer pour réaliser la fixation, ce qui complique le montage, et multiplie les risques de perte de pièces et les différents serrages nécessaires lors du montage du feu sur la carrosserie.

Un autre dispositif, proposé dans le document DE-C-195 11 137, permet de fixer un boîtier de dispositif de signalisation ou d'éclairage sur la carrosserie du véhicule et comprend deux extrémités encliquetables réunies par un ressort mobile, guidé dans sa direction d'élongation.

Ce document divulgue l'object du préambule de la revendication 1.

Mais ce dispositif connu n'offre pas de liberté de positionnement dans le plan perpendiculaire à la direction d'élongation et s'adapte mal à tous types de défauts de positionnement.

Par ailleurs, on remarque que l'encliquetage de ce dispositif entre le boîtier et la carrosserie nécessite une pression sur le dispositif, dans le sens de la compression du ressort, et qu'un système de blocage du ressort lors du montage est donc prévu pour éviter que le ressort ne fléchisse. Ceci aboutit à une structure compliquée et encombrante, avec des risques de rupture du dispositif.

Le but de la présente invention est de proposer un dispositif de fixation d'un boîtier de dispositif de signalisation ou d'éclairage à la carrosserie du véhicule, dont l'aptitude à rattraper les jeux soit améliorée.

Un autre but de l'invention est de proposer un dispositif de fixation dont le montage soit plus simple et rapide.

La présente invention propose un dispositif de fixation d'un boîtier de dispositif d'éclairage ou de signalisation d'un véhicule automobile sur la carrosserie du véhicule, comprenant un corps d'un seul tenant possédant une partie élastiquement déformable en allongement séparant une partie de fixation à la carrosserie d'une partie de fixation au boîtier, caractérisé en ce que l'une des deux parties de fixation est apte à être engagée dans un logement associé du boîtier ou de la carrosserie, de manière à disposer dans ce logement de deux degrés de liberté transversalement à la direction d'allongement de la partie élastiquement déformable.

Par ailleurs, le dispositif est caractérisé en ce que le corps est réalisé en matière plastique et comporte dans ladite partie élastiquement déformable une gorge dans laquelle est encastré un ressort métallique à lame sinueux, ledit ressort possèdant à au moins une de ses extrémités au moins une dent d'accrochage avec la matière du corps.

Plus particulièrement, le dispositif est caractérisé en ce que la partie de fixation au boîtier comporte une tête creuse reliée à la partie élastiquement déformable par une partie plus étroite, cette dernière étant apte à être engagée dans une ouverture formée dans une paroi solidaire du boîtier après encliquetage à travers un passage débouchant communiquant latéralement avec ladite ouverture.

Egalement, le dispositif est caractérisé en ce que le corps comporte, à une distance de la tête correspondant sensiblement à l'épaisseur de ladite paroi, une collerette.

Le dispositif est aussi caractérisé en ce que la partie de fixation à la carrosserie présente une tige filetée inamovible, apte à traverser la carrosserie et à coopérer avec un écrou, ou bien selon une variante, ladite partie est apte à coopérer avec une vis traversant la carrosserie, ou encore selon une autre variante, ladite partie est apte à coopérer avec une frette présentant une rainure de blocage en fin de filetage extérieur et apte à coopérer avec une vis traversant la carrosserie.

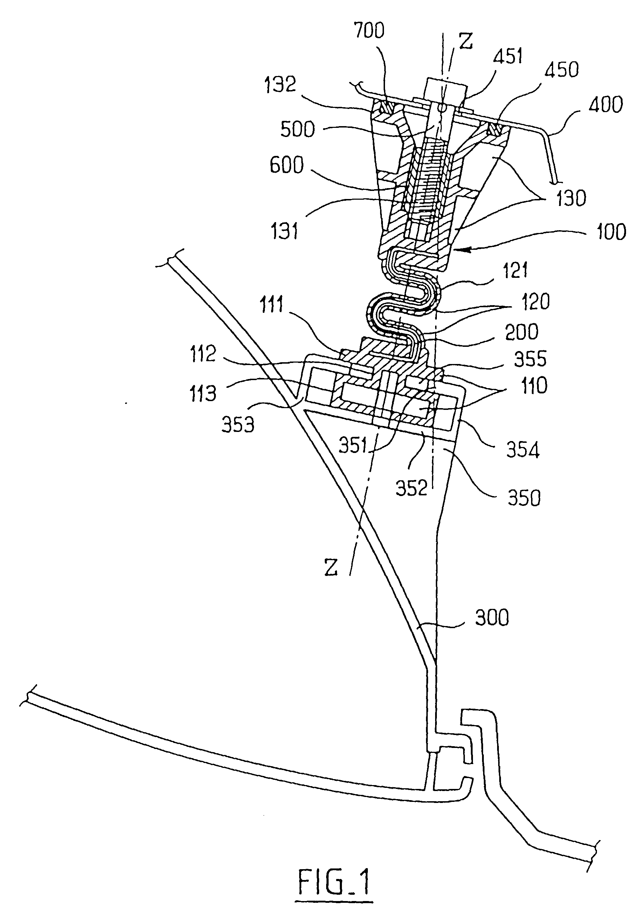

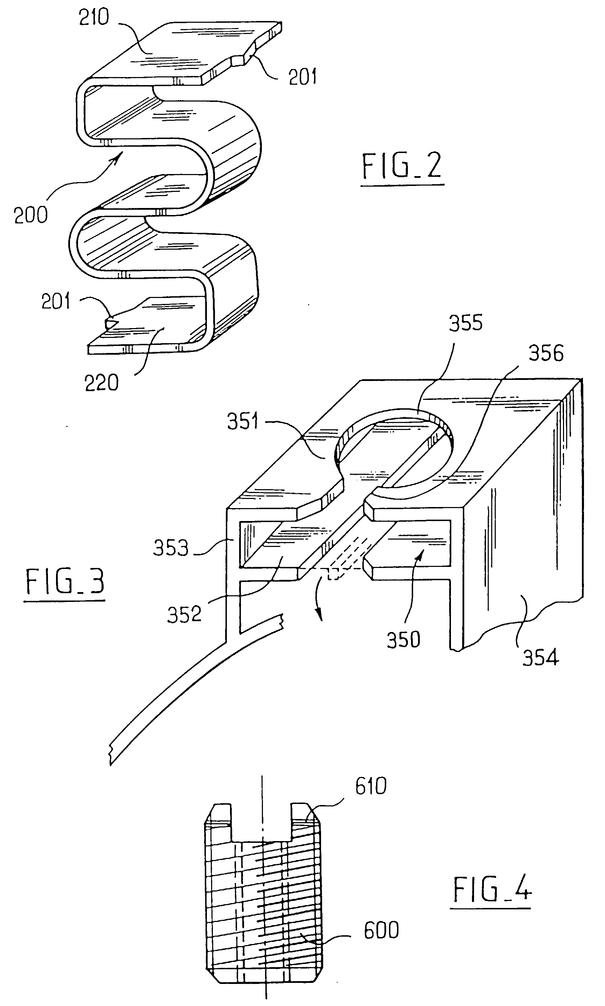

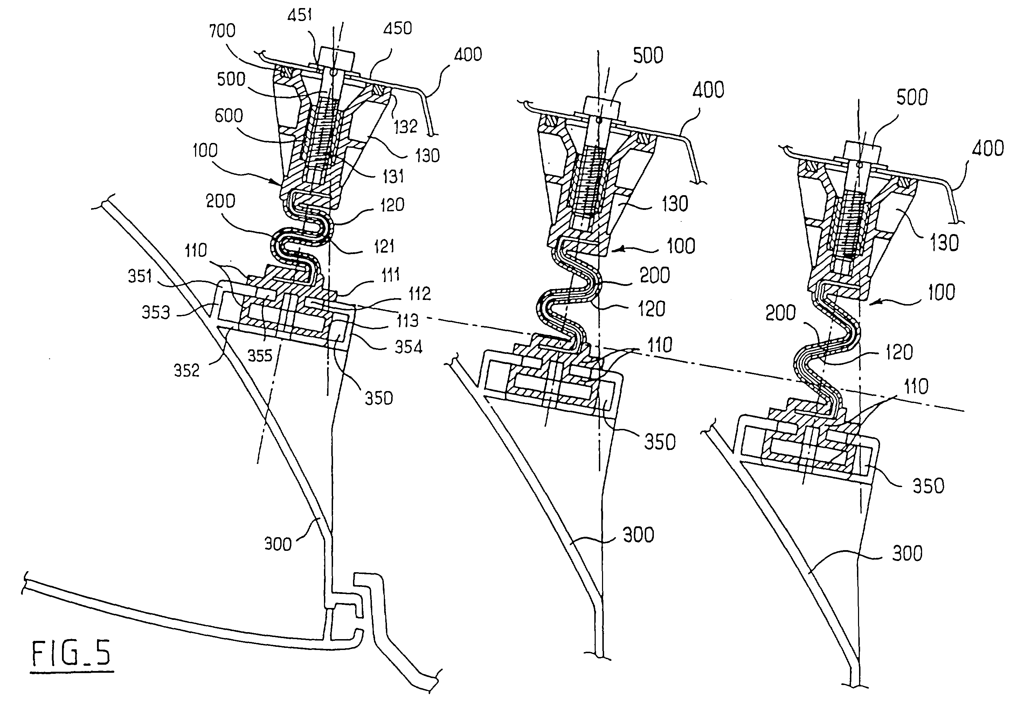

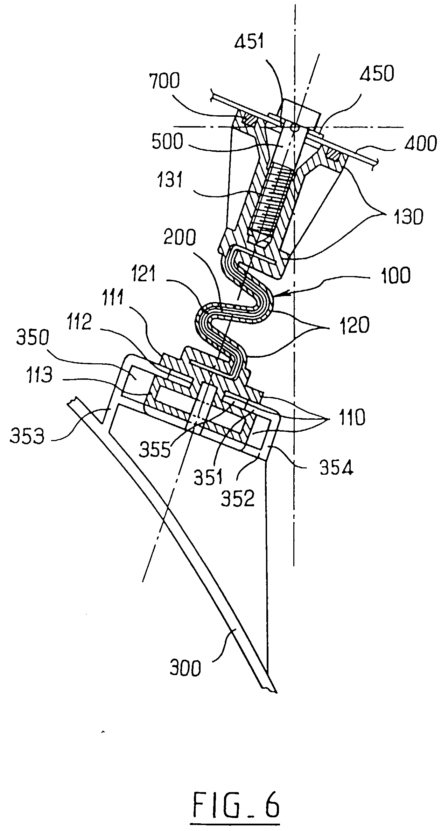

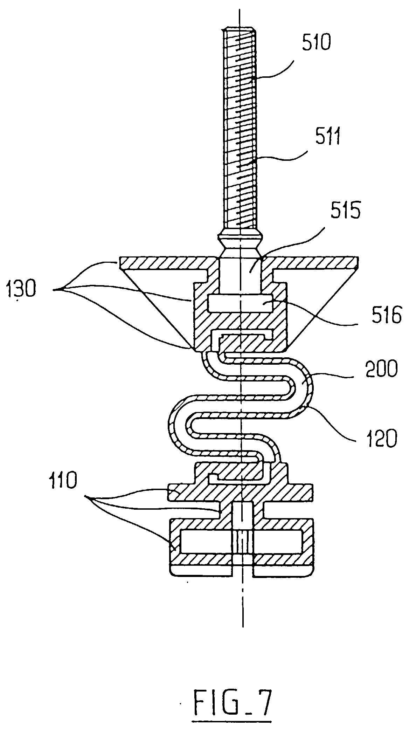

D'autres caractéristiques et avantages de l'invention apparaîtront à la lecture de la description qui suit. Cette description est purement illustrative et non limitative. Elle doit être lue en regard des dessins annexés sur lesquels :
. la figure 1 est une vue de dessus et partiellement en coupe horizontale d'un dispositif de fixation monté entre un boîtier de feu de signalisation et la carrosserie du véhicule ;
. la figure 2 est une vue en perspective d'un élément du dispositif de fixation ;
. la figure 3 est une vue en perspective d'une partie du boîtier de feu coopérant avec le dispositif de fixation ;
. la figure 4 est une vue en élévation d'un autre élément du dispositif de fixation ;
. la figure 5 est une vue analogue à la figure 1, montrant le dispositif de fixation dans trois états possibles ;
. la figure 6 est une vue de dessus et partiellement en coupe d'une variante du dispositif de fixation ;
. la figure 7 est une vue en coupe de dessus d'une variante du dispositif de fixation.

La figure 1 représente un dispositif de fixation destiné à opérer entre un logement 350 solidaire d'un boîtier 300 d'un feu de signalisation de véhicule automobile et une zone d'attache 450 de la carrosserie 400 du véhicule.

Le dispositif de fixation est constitué principalement d'un corps 100, d'un ressort sinueux 200, d'une vis 500 et d'une frette 600.

Il admet un axe principal ZZ, le long duquel le corps 100 du dispositif comprend trois parties.

Une partie 110, située à une extrémité du corps, permet de relier celui-ci au boîtier 300 en étant engagée dans le logement 350.

Une partie 130, ou embase, située à l'autre extrémité du corps, permet de fixer le corps 100 à la zone d'attache 450 de la carrosserie.

La partie centrale 120 du corps est destinée à loger un ressort en lame sinueux 200.

La partie 110 du corps est généralement cylindrique d'axe ZZ. Elle présente une collerette 111 assise sur la partie 120 du corps, et un disque creux 113 situé à une certaine distance de la collerette, et parallèle à celle-ci.

Le disque 113 est en l'espèce de même diamètre que la collerette. Une partie 112 de plus petit diamètre relie le disque 113 à la collerette 111. La partie de liaison 112 et le disque 113 sont évidés et peuvent subir une certaine déformation élastique.

Le logement 350 du boîtier, qui coopère avec la partie 110 du corps 100, est représenté sur la figure 3.

Ce logement 350 est de forme parallélépipédique. Il présente deux faces planes 351 et 352 perpendiculaires à l'axe ZZ, et situées entre deux flancs parallèles 353 et 354 issus du boîtier 300 du feu.

La face postérieure 351 (en haut sur la figure) du logement présente une ouverture circulaire 355 située en son centre. Le diamètre de l'ouverture 355 est inférieur au diamètre de la collerette 111 et du disque 113 du corps 100. Un passage débouchant 356 dans la face 351 permet à l'axe 112 d'être engagé dans l'ouverture 355, par déformation élastique ou encliquetage, autorisant un déplacement de la partie 110 du corps 100 dans le plan perpendiculaire à l'axe ZZ, grâce au fait que les dimensions transversales du disque 113 sont inférieures à celles du logement 350 et du fait que la section de l'axe 112 est plus petite que la taille de l'ouverture 355.

Ainsi, selon une caractéristique de l'invention, le dispositif de fixation peut se positionner librement dans le logement du boîtier de feu, pour s'adapter à différents jeux dans le positionnement transversal du boîtier par rapport à la carrosserie.

De préférence, l'épaisseur de la tête 113 est très légèrement inférieure à celle du logement 350, de façon à stabiliser le corps 100 du dispositif inséré dans le logement, dans une position perpendiculaire à la surface du logement 350 du boîtier.

Selon une autre variante, l'espace entre la collerette 111 et la tête 113 sera très légèrement supérieur à l'épaisseur de la face postérieure 351 du logement et le corps du dispositif sera aussi maintenu perpendiculaire à la surface du logement 350 du boîtier.

La partie centrale 120 du corps 100 présente une forme sinueuse, et possède un espace creux débouchant 121, ou gorge, permettant de loger le ressort 200. A chaque extrémité du ressort 200, une dent 201 permet de retenir le ressort à l'intérieur de l'espace 121.

Le corps 100 est réalisé en matériau thermoplastique.

Ainsi, selon une autre caractéristique avantageuse de l'invention, le corps 100 est capable de suivre et de s'adapter aux différentes déformations élastiques du ressort 200.

Le ressort en lame sinueux 200 est représenté sur la figure 2. Il présente quatre replis courbes et deux extrémités plates. Sur le bord libre de chaque extrémité, le ressort présente la dent de retenue précitée 201.

Le montage et le blocage du ressort 200 dans le corps 100 est réalisé comme suit.

Le ressort est présenté de côté, le long de la forme en creux de la partie 120 du corps 100, puis inséré par pression dans ladite partie 120. Les dents 201 assurent sa retenue par accrochage dans la matière du corps aux extrémités de sa forme en creux 121.

Le ressort 200 est réalisé de préférence en acier.

Selon une autre caractéristique avantageuse de l'invention, comme le montre la figure 5, le dispositif de fixation est capable, grâce au ressort 200, de subir une grande variété d'élongations selon l'axe ZZ et de flexions, en absorbant les efforts lors du montage.

Le ressort 200 peut si nécessaire être remplacé en cas de défaillance.

Enfin à l'autre extrémité du dispositif de fixation, la partie 130 du corps 100 loge une frette 600 et un joint torique d'étanchéité 700.

Plus précisément, la partie 130 du corps possède un alésage généralement cylindrique taraudé, d'axe ZZ, dans lequel est reçue la frette 600. Dans la face d'extrémité de la partie 130 est formée une gorge 132, qui reçoit le joint d'étanchéité 700.

La frette 600 est représentée sur la figure 4. Le diamètre extérieur de la frette correspond à celui de l'alésage de la partie 130, et son alésage intérieur est taraudé pour coopérer avec la vis 500. Ainsi la frette 600 est filetée sur ses faces extérieures et intérieures, et possède de préférence une rainure de blocage 610 en haut du filetage extérieur.

Une fois vissée dans le corps 100, la frette reste en place, bloquée par la rainure de blocage.

La frette est avantageusement réalisée en laiton, et a pour objet d'éviter que la partie 130 du corps, réalisée dans un matériau plastique, ne se fende lors du serrage de la vis 500.

Sur la carrosserie 400 du véhicule, la zone d'attache 450 représentée sur la figure 1, reçoit la partie 130 du corps du dispositif.

La zone d'attache 450 est plane, et présente une ouverture circulaire ordinaire 451, apte à recevoir la vis 500.

Le dispositif de fixation qui vient d'être décrit est utilisé de la façon suivante lors du montage ou du démontage de la fixation.

Le ressort 200, la frette 600 et le joint 700 sont montés initialement sur le corps 100 du dispositif, comme indiqué précédemment.

La partie 120 du corps est encliquetée dans le logement 350 du boîtier 300 de feu. Puis la vis 500 est engagée dans l'ouverture 451 de la carrosserie, et vissée dans la frette 600 du corps 100. Sous l'effet du serrage de la vis 500, la partie 120 du corps abritant le ressort 200 se déforme, et l'embase 130 du corps vient s'appliquer contre la zone d'attache 450 de la carrosserie, maintenant ainsi le boîtier 300 en place.

On remarquera que, selon une caractéristique avantageuse de l'invention, la fixation du boîtier 300 sur la carrosserie 400 nécessite seulement deux pièces indépendantes, à savoir la vis 500 et le corps 100 comportant le ressort 200, la frette 600 et le joint 700.

Selon une variante de l'invention, représentée sur la figure 6, il est possible de réaliser un dispositif de fixation ne comprenant pas de frette. La vis 500 coopère alors directement avec le corps 100 du dispositif. Le matériau du corps 100 est alors adapté.

Selon une autre variante du dispositif de fixation représentée sur la figure 7, la partie 130 du corps de la fixation comprend un goujon 510 inamovible d'axe ZZ, débouchant par la face d'extrémité de la partie 130, vers le haut sur la figure 7. Le goujon 510 présente une tige filetée 511 et une zone d'attache 515 avec la partie 130 du corps. A l'extrémité de la zone d'attache 515 une tête 516 permet d'immobiliser le goujon dans le corps 100, moulé autour du goujon.

Dans cette variante de l'invention, le montage du feu de signalisation sur la carrosserie du véhicule est réalisé en vissant un écrou sur la tige filetée 511 du dispositif, insérée dans la zone d'attache 450 de la carrosserie. Cette variante permet de ne pas utiliser de frette tout en évitant de fendre le corps lors du montage de la fixation.

Selon d'autres variantes, il est possible de réaliser le corps 100 du dispositif et le ressort 200, ainsi que la frette 600 dans des matériaux différents, et de les assembler par des techniques différentes.

Ainsi le corps 100 peut par exemple être surmoulé sur la frette 600 et/ou le ressort 200, qui constituent alors des inserts.

Par ailleurs, on peut éviter de recourir à un ressort spécifique 200, en adaptant le matériau du corps 100 au moins dans la partie intermédiaire 120, par exemple en le renforçant par incorporation d'agents de renfort dans la matière plastique.

## Revendications

1. Dispositif de fixation d'un boîtier (300) de dispositif d'éclairage ou de signalisation d'un véhicule automobile sur la carrosserie (400) du véhicule, comprenant un corps (100) d'un seul tenant possédant une partie (120) élastiquement déformable en allongement séparant une partie (130) de fixation à la carrosserie d'une partie (110) de fixation au boîtier (300), caractérisé en ce que l'une des deux parties de fixation est apte à être engagée dans un logement (350) associé du boîtier (300) ou de la carrosserie (400), de manière à disposer dans ce logement de deux degrés de liberté transversalement à la direction d'allongement de la partie élastiquement déformable.

2. Dispositif selon la revendication 1, caractérisé en ce que le corps (100) est réalisé en matière plastique et comporte dans ladite partie élastiquement déformable une gorge (121) dans laquelle est encastré un ressort métallique (200).

3. Dispositif selon la revendication 2, caractérisé en ce que le ressort métallique (200) est un ressort à lame sinueux.

4. Dispositif selon la revendication 3, caractérisé en ce que le ressort (200) à lame possède à au moins une de ses extrémités au moins une dent (201) d'accrochage avec la matière du corps (100).

5. Dispositif selon l'une des revendications 1 à 4, caractérisé en ce que la partie (110) de fixation au boîtier comporte une tête (113) reliée à la partie élastiquement déformable (120) par une partie plus étroite (112), cette dernière étant apte à être engagée dans une ouverture (355) formée dans une paroi (351) solidaire du boîtier (300) après encliquetage à travers un passage débouchant (356) communiquant latéralement avec ladite ouverture (355).

6. Dispositif selon la revendication 5, caractérisé en ce que la tête (113) est creuse.

7. Dispositif selon la revendication 5 ou 6, caractérisé en ce que le corps (100) comporte également, à une distance de la tête correspondant sensiblement à l'épaisseur de ladite paroi (351), une collerette (111).

8. Dispositif selon l'une des revendications 5 à 7, caractérisé en ce que la partie (130) de fixation à la carrosserie présente une tige filetée (511) inamovible apte à traverser la carrosserie et à coopérer avec un écrou.

9. Dispositif selon l'une des revendications 5 à 7, caractérisé en ce que la partie (130) de fixation à la carrosserie est apte à coopérer avec une vis (500) traversant la carrosserie (400).

10. Dispositif selon l'une des revendications 5 à 7, caractérisé en ce que la partie (130) de fixation à la carrosserie est apte à coopérer avec une frette (600) présentant une rainure de blocage en fin de filetage extérieur et apte à coopérer avec une vis (500) traversant la carrosserie (400).

## Patentansprüche

1. Vorrichtung zur Befestigung eines Gehäuses (300) einer Beleuchtungs- oder Signalvorrichtung eines Kraftfahrzeugs an der Fahrzeugkarosserie (400), umfassend einen einteiligen Körper (100), der einen elastisch dehnungsverformbaren Teil (120) besitzt, der einen Teil (130) zur Befestigung an der Karosserie von einem Teil (110) zur Befestigung am Gehäuse (130) trennt, **dadurch gekennzeichnet**, daß einer der beiden Befestigungsteile in eine zum Gehäuse (300) oder zur Karosserie (400) gehörende Aufnahme (350) eingesetzt werden kann, so daß in dieser Aufnahme zwei Freiheitsgrade quer zur Dehnungsrichtung des elastisch verformbaren Teils verfügbar sind.

2. Vorrichtung nach Anspruch 1, **dadurch gekennzeichnet**, daß der Körper (100) aus Kunststoff ausgeführt ist und in dem besagten elastisch verformbaren Teil eine Auskehlung (121) enthält, in die eine Metallfeder (200) eingelassen ist.

3. Vorrichtung nach Anspruch 2, **dadurch gekennzeichnet**, daß die Metallfeder (200) eine gewundene Blattfeder ist.

4. Vorrichtung nach Anspruch 3, **dadurch gekennzeichnet**, daß die Blattfeder (200) wenigstens an einem ihrer Enden wenigstens einen Zahn (201) zum Einhaken am Material des Körpers (100) besitzt.

5. Vorrichtung nach einem der Ansprüche 1 bis 4, **dadurch gekennzeichnet**, daß der Teil (110) zur Befestigung am Gehäuse einen Kopf (113) umfaßt, der mit dem elastisch verformbaren Teil (120) durch einen schmaleren Teil (112) verbunden ist, wobei letzterer in eine Öffnung (355), die in einer fest mit dem Gehäuse (300) verbundenen Wand (351) ausgebildet ist, nach dem Einrasten durch einen austretenden Durchgang (356) eingesetzt werden kann, der seitlich mit der besagten Öffnung (355) in Verbindung steht.

6. Vorrichtung nach Anspruch 5, **dadurch gekennzeichnet**, daß der Kopf (113) hohl ist.

7. Vorrichtung nach Anspruch 5 oder 6, **dadurch gekennzeichnet**, daß der Körper (100) außerdem in einem Abstand von dem Kopf, der in etwa der Dicke der besagten Wand (351) entspricht, einen Kragen (111) umfaßt.

8. Vorrichtung nach einem der Ansprüche 5 bis 7, **dadurch gekennzeichnet**, daß der Teil (130) zur Befestigung an der Karosserie einen nicht abnehmbaren Gewindestift (511) aufweist, der durch die Karosserie hindurchgehen und mit einer Mutter zusammenwirken kann.

9. Vorrichtung nach einem der Ansprüche 5 bis 7, **dadurch gekennzeichnet**, daß der Teil (130) zur Befestigung an der Karosserie mit einer Schraube (500) zusammenwirken kann, die durch die Karosserie (400) hindurchgeht.

10. Vorrichtung nach einem der Ansprüche 5 bis 7, **dadurch gekennzeichnet**, daß der Teil (130) zur Befestigung an der Karosserie mit einem Ring (600) zusammenwirken kann, der eine Arretiernut am Außengewindeende aufweist und mit einer durch die Karosserie (400) hindurchgehenden Schraube (500) zusammenwirken kann.

## Claims

1. Device for fixing the casing (300) of a lighting or indicating device on a motor vehicle to the bodywork (400) of the vehicle, comprising a body (100) in a single piece having a part (120) which is elastically deformable in elongation separating a part (130) for fixing to the bodywork from a part (110) for fixing to the casing (300), characterised in that one of the two fixing parts is able to be engaged in a housing (350) associated with the casing (300) or the bodywork (400), so as to have in this housing two degrees of freedom transversely to the direction of elongation of the elastically deformable part.

2. Device according to Claim 1, characterised in that the body (100) is produced from plastics material and has, in the said elastically deformable part, a recess(121) in which a metallic spring (200) is embedded.

3. Device according to Claim 2, characterised in that the metallic spring (200) is a spring with a sinuous leaf.

4. Device according to Claim 3, characterised in that the leaf spring (200) has, at at least one of its ends, at least one tooth (201) for attachment to the material of the body (100).

5. Device according to one of Claims 1 to 4, characterised in that the part (110) for fixing to the casing has a head (113) connected to the elastically deformable part (120) by a narrower part (112), the latter being able to be engaged in an opening (355) formed in a wall (351) fixed to the casing (300) after snapping through a through passage (356) communicating laterally with the said opening (355).

6. Device according to Claim 5, characterised in that the head (113) is hollow.

7. Device according to Claim 5 or 6, characterised in that the body (100) also has, at a distance from the head corresponding substantially to the thickness of the said wall (351), a collar (111).

8. Device according to one of Claims 5 to 7, characterised in that the part (130) for fixing to the bodywork has a non-removable threaded rod (511) able to pass through the bodywork and cooperate with a nut.

9. Device according to one of Claims 5 to 7, characterised in that the part (130) for fixing to the bodywork is able to cooperate with a screw (500) passing through the bodywork (400).

10. Device according to one of Claims 5 to 7, characterised in that the part (130) for fixing to the bodywork is able to cooperate with a band (600) having an external end-of-thread locking groove and able to cooperate with a screw (500) passing through the bodywork (400).
